# EUROPÄISCHE PATENTSCHRIFT

(11) **EP 3 861 041 B1**
(45) Veröffentlichungstag und Bekanntmachung des Hinweises auf die Patenterteilung: **07.01.2026**
(21) Anmeldenummer: 19779028.0
(22) Anmeldetag: 02.10.2019
(51) Int. Cl.: C08G 18/48, C08G 18/75, C08G 18/10

(54) **HÄRTBARE ZUSAMMENSETZUNG MIT GERINGER DICHTE**
HARDENABLE COMPOSITION WITH LOW DENSITY
COMPOSITION DURCISSABLE DE UNE DENSITE FAIBLE

(30) Priorität: 03.10.2018 EP 18198456
(43) Veröffentlichungstag der Anmeldung: 11.08.2021
(73) Patentinhaber: Sika Technology AG, 6340 Baar (CH)
(72) Erfinder: MENNECKE, Klaas, 79807 Lottstetten (DE); RUTZ, Daniele, 8049 Zürich (CH); STAUBER-FEDIER, Sara, 8305 Dietlikon (CH); DURMIC, Berzad, 5621 Zufikon (CH)
(74) Vertreter: Sika Patent Attorneys
(86) Internationale Anmeldenummer: PCT/EP2019/076740
(87) Internationale Veröffentlichungsnummer: WO 2020/070207

(56) Entgegenhaltungen:
- WO-A1-2017/121540
- DE-A1- 102012 223 422

## Beschreibung

### Technisches Gebiet

Die Erfindung betrifft feuchtigkeitshärtende Zusammensetzungen mit niedriger Dichte und ihre Verwendung als Kleb- und Dichtstoffe sowie Beschichtungen.

### Stand der Technik

Feuchtigkeitshärtende Zusammensetzungen spielen eine bedeutende Rolle in vielen technischen Anwendungen, beispielsweise als ein- oder zweikomponentige Klebstoffe, Dichtstoffe oder Beschichtungen. Ihre Aushärtung wird durch Vernetzungsreaktionen bewirkt, welche unter Einfluss von Wasser über freie oder latente Reaktivgruppen wie beispielsweise Isocyanatgruppen oder Silangruppen ablaufen, wobei diese durch Kontakt mit Feuchtigkeit, hauptsächlich aus der Luft oder als Wasser in einer zweiten Mischkomponente, mit sich selbst oder untereinander reagieren und so die in der Zusammensetzung enthaltenen Aufbaukomponenten kovalent zu einem polymeren Netzwerk verbinden.

Je nach Anwendungsbereich lässt sich auf dem Gebiet der feuchtigkeitshärtenden Zusammensetzungen eine sehr breite Palette an Produkten mit vielseitigen individuellen Eigenschaften formulieren. Dabei spielen vor allem Zusatzmittel eine grosse Rolle, wie beispielsweise Füllstoffe, Weichmacher, Additive und Haftvermittler, welche die Eigenschaften der Formulierung, wie beispielsweise Adhäsion, Mechanik und Verarbeitbarkeit wesentlich beeinflussen. Die meisten dieser feuchtigkeitshärtenden Zusammensetzungen besitzen eine relativ hohe Dichte, meist im Bereich von 1.20 kg/L und darüber. Die Dichte wird einerseits von den wesentlichen Bestandteilen wie feuchtigkeitsreaktives Polymer, Weichmacher und Haftvermittleradditiven begründet, die höhere Dichte über 1.00 kg/L vor allem jedoch auch von Füllstoffen. Füllstoffe sind in solchen feuchtigkeitshärtenden Zusammensetzungen meist unverzichtbar. Sie sorgen einerseits für eine deutliche Kostenreduktion der Formulierung, andererseits liefern sie einen grossen Beitrag an die mechanischen Eigenschaften sowie die Verarbeitungseigenschaften der Zusammensetzungen. Leider besitzen gängige Füllstoffe wie Kreide üblicherweise eine Dichte im Bereich von über 2.00 kg/L, was die Gesamtdichte der Zusammensetzung signifikant erhöht. Im Zuge der fortschreitenden Leichtbauweise und zur Reduzierung von Transportkosten werden in Bau und Industrie jedoch je länger je mehr Kleb- und Dichtstoffe mit niedriger Dichte nachgefragt. Dabei sind vor allem Dichten von 1.00 kg/L oder sogar darunter gewünscht. Um diesem Bedürfnis nachzukommen wurden seit einiger Zeit mikroskopische Hohlkugeln als Zusatzmittel in feuchtigkeitsreaktiven Zusammensetzungen eingesetzt. Bei diesen Hohlkugeln handelt es sich um im Wesentlichen sphärische, mit Gas gefüllte Partikel mit einem Durchmesser von höchstens 500 µm und Hüllen beispielsweise aus Glas, Silikaten oder Kunststoffen. Diese mikroskopischen Hohlkugeln besitzen eine Dichte von teilweise weit unter 1.00 kg/L und können, wenn sie in feuchtigkeitshärtende Zusammensetzungen eingemischt werden, deren resultierende Gesamtdichte wesentlich reduzieren. Zusätzlich zur geringen Dichte lassen sich so auch vorteilhafte Eigenschaften wie Wärmeisolierung oder Schallisolierung verwirklichen, was beispielsweise im Fahrzeugbau oder bei Fussbodenklebstoffen erwünscht ist. Beispielsweise offenbart WO 2017/121540 A1 eine reaktive Schmelzklebstoff-Zusammensetzung auf Polyurethanbasis, welche Glashohlkugeln enthält und zumindest in einigen Ausführungsformen eine dadurch verminderte Gesamtdichte aufweist.

Allerdings führt der Einsatz solcher mikroskopischer Hohlkugeln zur Dichtereduzierung auch zu wesentlichen Nachteilen. Besonders die mechanischen Eigenschaften wie Bruchdehnung und im besonderen Masse die Zugfestigkeit leiden bei Einsatz solcher mikroskopischen Hohlkugeln deutlich. Dies ist vor allem ein Problem bei strukturellen Klebstoffen, wo eine hervorragende Mechanik absolut unverzichtbar ist. Um dem zu begegnen hat man angefangen, grosse Mengen an verstärkendem Russ als Füllstoff einzumischen. Dadurch kann zwar eine akzeptable Mechanik und eine reduzierte Dichte erreicht werden, jedoch wird die Zusammensetzung extrem dick und kann nur noch mit Hochleistungspumpen oder unter Erwärmung appliziert werden. Darüber hinaus lassen sich so nur tiefschwarze Zusammensetzungen herstellen, welche nicht einfärbbar sind und somit ästhetisch gesehen eine sehr beschränkte Anwendungsbreite besitzen.

Verbreitet ist auch der Einsatz von mikroskopischen Hohlkugeln mit polymeren Hüllen, beispielsweise vermarktet unter dem Handelsnamen Expancel. Diese sind zwar mit den anderen Bestandteilen der Zusammensetzung sehr gut kompatibel und führen damit dazu, dass die Mechanik der gewichtsreduzierten Zusammensetzungen bis zu einem gewissen Grad erhalten bleibt. Allerdings sind diese Hohlkugeln unter Druck reversibel verformbar, d.h. komprimierbar. Dadurch kommt es beim Auspressen der Zusammensetzung beispielsweise aus einer Kartusche zu einem unerwünschten Nachlaufen der Zusammensetzung aus dem Applikationsgerät, was für den Anwender äusserst unangenehm ist. Der Zusatz solcher mikroskopischen Hohlkugeln mit polymeren Hüllen oder auch Glashohlkugeln allgemeiner Art zu Zusammensetzungen auf Basis silylierter Polyurethane wird beispielsweise in DE 10 2012 223422 A1 gelehrt, ohne jedoch damit verbundene Herausforderungen oder Vorteile darzustellen.

Ganz allgemein weisen feuchtigkeitshärtende Zusammensetzungen geringer Dichte welche mikroskopische Hohlkugeln enthalten eine schlechte Pumpbarkeit auf, wobei in vielen Fällen die Dichte nach Pumpanwendungen irreversibel erhöht ist. Ausserdem weisen die meisten dieser Zusammensetzungen eine verminderte Dichte auf, die über die Zeit nicht stabil ist und nach längerer Lagerung irreversibel erhöht wird. Die Gründe dafür liegen beispielsweise in einer Zerstörung wesentlicher Anteile der Hohlkugeln oder in Einwanderung von Substanzen in deren Hohlräume.

Es besteht daher nach wie vor das Bedürfnis nach einer feuchtigkeitshärtenden Zusammensetzung mit einer Dichte von unter 1.20 kg/L, bevorzugt unter 1.10 kg/L, insbesondere unter 1.00 kg/L, welche die oben erwähnten Nachteile des Standes der Technik nicht aufweist und eine verbesserte Mechanik, insbesondere Zugfestigkeit, gute Pumpbarkeit bei niedrigen Auspresskräften und eine stabile reduzierte Dichte auch nach Pumpanwendung und längerer Lagerung aufweist.

### Darstellung der Erfindung

Aufgabe der vorliegenden Erfindung ist es daher, eine feuchtigkeitshärtende Zusammensetzung mit einer Dichte von unter 1.20 kg/L, bevorzugt unter 1.10 kg/L, insbesondere unter 1.00 kg/L bereitzustellen, welche eine verbesserte Zugfestigkeit bei guter Bruchdehnung aufweist, gut bei Raumtemperatur applizierbar und pumpbar ist, deren Dichte durch Pumpen oder längerer Lagerung nicht irreversibel signifikant erhöht wird und die bei Applikation kein Nachlaufen erzeugt.

Diese Aufgabe wird durch eine feuchtigkeitshärtende Zusammensetzung wie in Anspruch 1 beschrieben auf überraschende Weise gelöst. Durch die Verwendung eines anorganischen Füllstoffs in Kombination mit mikroskopischen Hohlkugeln bestimmter Grösse und Druckfestigkeit und definierter Menge aller Bestandteile der Zusammensetzung kann eine feuchtigkeitshärtende Zusammensetzung geringer Dichte hergestellt werden, welche die Aufgabe der vorliegenden Erfindung erfüllt.

In bevorzugten Ausführungsformen können so sowohl Bauklebstoffe beispielsweise für Fussböden hergestellt werden, als auch vergleichsweise leicht applizierbare strukturelle Klebstoffe oder Dichtstoffe mit Schall- und Wärmeisolationseigenschaften oder brandmindernden Eigenschaften.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine feuchtigkeitshärtende Zusammensetzung, umfassend
a) mindestens ein feuchtigkeitsreaktives Polymer **P** mit einem Anteil von 10 bis 60 Gew.-%, bezogen auf die gesamte Zusammensetzung,
b) mindestens einen anorganischen Füllstoff **F,** mit einem Anteil von mindestens 9 Gew.-%, bezogen auf die gesamte Zusammensetzung,
c) zwischen 3 und 25 Gew.-%, bezogen auf die gesamte Zusammensetzung, mindestens einer Art mikroskopischer Hohlkugeln **H,**
dadurch gekennzeichnet, dass
die Zusammensetzung eine Dichte von weniger als 1.20 kg/L, bevorzugt weniger als 1.10 kg/L, aufweist, und
die mikroskopischen Hohlkugeln **H** eine Druckfestigkeit, gemessen nach ASTM D3102-72, von mindestens 2.5 MPa, bevorzugt mindestens 5 MPa, aufweisen, und
die mikroskopischen Hohlkugeln **H** eine volumenbasierte Partikelgrösse D90, gemessen mit einem Coulter-Zähler, von weniger als 100 µm aufweisen.

Der Begriff "Silangruppe" bezeichnet eine an einen organischen Rest gebundene Silylgruppe mit einer bis drei, insbesondere zwei oder drei, hydrolysierbaren Substituenten am Silicium-Atom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein.

Als "Hydroxysilan", "Isocyanatosilan", "Aminosilan" bzw. "Mercaptosilan" werden Organoalkoxysilane bezeichnet, die am organischen Rest zusätzlich zur Silangruppe eine oder mehrere Hydroxyl-, Isocyanato-, Amino- bzw. Mercaptogruppen aufweisen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im Polymer-Rückgrat mehrheitlich Kohlenstoffatome aufweist, sowie Umsetzungsprodukte eines solchen Kollektivs von Makromolekülen.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Silangruppen-haltige Polymere sind dabei einerseits Silikonpolymere (Polydiorganosiloxanpolymere) und andererseits insbesondere Silangruppen-haltige organische Polymere, welche üblicherweise und insbesondere in diesem Dokument gleichbedeutend auch als "silanfunktionelle Polymere", "silanmodifizierte Polymere" (SMP) oder "silanterminierte Polymere" (STP) bezeichnet werden. Ihre Vernetzung verläuft über die Kondensation von Silanolgruppen unter Ausbildung von Siloxanbindungen und wird klassischerweise mittels Organozinn-Verbindungen, wie insbesondere Dialkylzinn(IV)-carboxylaten, katalysiert.

Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Eine gestrichelte Linie in den Formeln in diesem Dokument stellt jeweils die Bindung zwischen einem Substituenten und dem zugehörigen Molekülrest dar. Als "Raumtemperatur" wird eine Temperatur von ca. 23°C bezeichnet.

Alle im Dokument erwähnten Industriestandards und Normen beziehen sich auf die zum Zeitpunkt der Einreichung der Erstanmeldung gültigen Fassung.

Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

Als feuchtigkeitshärtende Zusammensetzung im Sinne dieser Erfindung ist insbesondere
- eine Polyurethan-Zusammensetzung, insbesondere ein zweikomponentiges, durch Reaktion von Polyolen mit Isocyanaten vernetzendes System, wie es beispielsweise für Klebstoffe, Beläge, Vergussmassen, Dichtfugen, Formkörper oder Blockschäume eingesetzt wird, oder ein einkomponentiges System mit blockierten (latenten) Isocyanatgruppen oder blockierten (latenten) Aminogruppen, wie es beispielsweise in Pulverlacken, Coil Coatings, Elektrotauchlacken oder Flüssiglacken eingesetzt wird; oder
- eine Zusammensetzung auf Basis von silanfuntionellen (Silangruppen-haltigen) Polymeren. Zusammensetzungen auf Basis von silanfunktionellen Polymeren härten auch bei relativ geringer Katalysator-Konzentration rasch aus und zeigen ein gutes Haftverhalten (Adhäsionsverhalten) auf vielen Substraten auch ohne den Einsatz von Primern. Sie sind ausserdem durch das Fehlen von Isocyanaten toxikologisch vorteilhaft.

Somit eignen sich als feuchtigkeitsreaktives Polymer **P** im Sinne dieser Erfindung bevorzugt Polyurethanpolymere **PU** mit freien oder latenten Isocyanaten sowie silanfunktionelle Polymere **STP.**

Die erfindungsgemässe Zusammensetzung enthält das mindestens eine feuchtigkeitsreaktive Polymer **P** mit einem Anteil von 10 bis 60 Gew.-%, bevorzugt 15 bis 50 Gew.-%, bezogen auf die gesamte Zusammensetzung.

In einer Ausführungsform umfasst das feuchtigkeitsreaktive Polymer **P** mindestens ein Polyurethanpolymer **PU** mit freien oder latenten Isocyanatgruppen. Als Isocyanatgruppen aufweisende Polyurethanpolymere **PU** zur Herstellung einer erfindungsgemässen Zusammensetzung eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.2 bis 3 Gew.-%, besonders bevorzugt 0.3 bis 2.5 Gew.-%, bezogen auf das gesamte Polymer, verbleibt.

Gegebenenfalls kann das Polyurethanpolymer **PU** unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.3:1 bis 4:1, insbesondere 1.5:1 bis 3:1 und besonders bevorzugt 1.7:1 bis 2.5:1 erhalten werden.

Geeignete Polyole für die Herstellung des Isocyanatgruppen aufweisenden Polyurethanpolymers sind insbesondere Polyetherpolyole, Styrol-Acrylnitrilgepfropfte Polyetherpolyole, Polyesterpolyole, Polycarbonatpolyole, Poly(meth)acrylatpolyole, polyhydroxyfunktionelle Fette und Öle oder Polykohlenwasserstoffpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butadien oder Diengemischen und Vinylmonomeren wie Styrol, Acrylnitril oder Isobutylen, oder polyhydroxyfunktionelle Polybutadienpolyole, beispielsweise solche, die durch Oxidation von Polybutadien oder Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 20'000 g/mol, und eine mittlere OH-Funktionalität im Bereich von 1.6 bis 3 auf.

Besonders geeignete Polyole sind Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden. Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, mund p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate, wobei MDI und TDI besonders bevorzugt sind.

In der erfindungsgemässen Zusammensetzung ist das Isocyanatgruppen aufweisende Polyurethanpolymer **PU** bevorzugt in einer Menge von 10 Gew.-% bis 60 Gew.-%, insbesondere in einer Menge von 15 Gew.-% bis 50 Gew.-%, bezogen auf die gesamte Zusammensetzung, vorhanden.

In einkomponentigen Zusammensetzungen enthaltend das Isocyanatgruppen aufweisende Polyurethanpolymer **PU** kann es vorteilhaft sein, die Isocyanatgruppen zu blockieren und damit latent zu machen, um die Lagerstabilität durch Verhindern einer vorzeitigen Reaktion im Gebinde zu erhöhen.

Die Blockierung von Isocyanatgruppen zur Herstellung von blockierten oder latenten Isocyanatgruppen durch entsprechende Blockierungsmittel, die thermoreversibel mit Isocyanatgruppen reagieren können, ist auf dem Gebiet eine gängige Massnahme und der Fachmann kann sie ohne weiteres durchführen. Der Fachmann kennt eine breite Anzahl geeigneter Blockierungsmittel bzw. Blockierungsgruppen, z.B. aus den Übersichtsartikeln von Douglas A. Wick in Progress in Organic Coatings 36 (1999), 148-172 und in Progress in Organic Coatings 41 (2001), 1-83, worauf hiermit verwiesen wird.

Eine andere, zuweilen noch vorteilhaftere Methode zur Stabilisierung von einkomponentigen Polyurethanzusammensetzungen ist die Verwendung von latenten Härtern. Dabei handelt es sich um blockierte (latente) Polyamine, die unter Einfluss von z.B. Wasser ihre Blockierungsgruppe verlieren und zu freien Aminen reagieren, die dann in einer schnellen Reaktion mit den Isocyanaten unter Vernetzung reagieren.

Solche blockierten Amine als latente Härter sind dem Fachmann auch bestens bekannt und er findet im Stand der Technik viele Möglichkeiten, latente Amine herzustellen und zu verwenden. Beispielsweise werden sie in US 4,469,831, US 4,853,454 und US 5,087,661 sowie in EP 1772447 beschrieben, worauf hiermit verwiesen wird.

In einer weiteren Ausführungsform umfasst das feuchtigkeitsreaktive Polymer **P** mindestens ein silanfunktionelles Polymer **STP.**

In einer Ausführungsform davon ist das silanfuntionelle Polymer ein Polydiorganosiloxanpolymer. Somit ist die Zusammensetzung eine Silikonzusammensetzung, welche silanfunktionelle Polymere mit reaktiven Silanendgruppen, beispielsweise Alkoxy-, Acetoxy- oder Oximsilanendgruppen umfasst und/oder silanfunktionelle Polymere mit Silanolendgruppen, wobei insbesondere im letztgenannten Fall noch Silikonvernetzer in der Zusammensetzung enthalten sein müssen. Derartige Silikonsysteme sind dem Fachmann längstens bekannt. Beispielsweise werden solche Silikonsysteme, insbesondere die zugehörigen silanfunktionellen Polymere und Vernetzer, wie sie für die vorliegende Erfindung geeignet sind, in der WO 2018/033563 A1 beschrieben.

Das silanfunktionelle Polymer **STP** ist bevorzugt ein Silangruppen-haltiges organisches Polymer, insbesondere ein Polyurethan, Polyolefin, Polyester, Polyamid, Poly(meth)acrylat oder Polyether oder eine Mischform dieser Polymere, welches jeweils eine oder bevorzugt mehrere Silangruppen trägt. Die Silangruppen können seitlich in der Kette oder endständig stehen und sind über ein C-Atom an das organische Polymer gebunden.

Besonders bevorzugt ist das Silangruppen-haltige organische Polymer ein Silangruppen-haltiges Polyurethan oder ein ein Silangruppen-haltiges Polyolefin oder ein Silangruppen-haltiger Polyester oder ein Silangruppen-haltiges Poly(meth)acrylat oder ein Silangruppen-haltiger Polyether oder eine Mischform dieser Polymere.

Am meisten bevorzugt ist das Silangruppen-haltige organische Polymer ein Silangruppen-haltiger Polyether oder ein Silangruppen-haltiges Polyurethan, welches bevorzugt aus Polyetherpolyolen aufgebaut ist.

Das Silangruppen-haltige organische Polymer weist als Silangruppen bevorzugt Alkoxysilangruppen auf, insbesondere Alkoxysilangruppen der Formel (I), 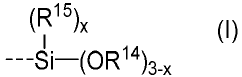 wobei
R¹⁴ für einen linearen oder verzweigten, einwertigen Kohlenwasserstoffrest mit 1 bis 5 C-Atomen, insbesondere für Methyl oder für Ethyl oder für Isopropyl, steht;
R¹⁵ für einen linearen oder verzweigten, einwertigen Kohlenwasserstoffrest mit 1 bis 8 C-Atomen, insbesondere für Methyl oder für Ethyl, steht; und
x für einen Wert von 0 oder 1 oder 2, bevorzugt für 0 oder 1, insbesondere für 0, steht.

Besonders bevorzugt steht R¹⁴ für Methyl oder für Ethyl.

Besonders bevorzugt sind Trimethoxysilangruppen, Dimethoxymethylsilangruppen oder Triethoxysilangruppen.

Dabei weisen Methoxysilangruppen den Vorteil auf, dass sie besonders reaktiv sind, und Ethoxysilangruppen weisen den Vorteil auf, dass sie toxikologisch vorteilhaft und besonders lagerstabil sind.

Das Silangruppen-haltige organische Polymer weist im Mittel bevorzugt 1.3 bis 4, insbesondere 1.5 bis 3, besonders bevorzugt 1.7 bis 2.8, Silangruppen pro Molekül auf. Die Silangruppen sind bevorzugt endständig.

Das Silangruppen-haltige organische Polymer **STP** weist bevorzugt ein mittleres Molekulargewicht im Bereich von 1'000 bis 30'000 g/mol, insbesondere von 2'000 bis 20'000 g/mol, auf. Das Silangruppen-haltige organische Polymer weist bevorzugt ein Silan-Equivalentgewicht von 300 bis 25'000 g/Eq, insbesondere von 500 bis 15'000 g/Eq, auf.

Das Silangruppen-haltige organische Polymer **STP** kann bei Raumtemperatur fest oder flüssig vorliegen. Bevorzugt ist es bei Raumtemperatur flüssig.

Meist bevorzugt handelt es sich beim Silangruppen-haltigen organischen Polymer **STP** um einen bei Raumtemperatur flüssigen Silangruppen-haltigen Polyether, wobei die Silangruppen insbesondere Dialkoxysilangruppen und/oder Trialkoxysilangruppen, besonders bevorzugt Trimethoxysilangruppen oder Triethoxysilangruppen, sind.

Verfahren zur Herstellung von Silangruppen-haltigen Polyethern sind dem Fachmann bekannt.

In einem bevorzugten Verfahren sind Silangruppen-haltige Polyether erhältlich aus der Umsetzung von Allylgruppen-haltigen Polyethern mit Hydrosilanen, gegebenenfalls unter Kettenverlängerung mit beispielsweise Diisocyanaten.

In einem weiteren bevorzugten Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.

In einem weiteren bevorzugten Verfahren sind Silangruppen-haltige Polyether erhältlich aus der Umsetzung von Polyetherpolyolen mit Isocyanatosilanen, gegebenenfalls unter Kettenverlängerung mit Diisocyanaten.

In einem weiteren bevorzugten Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, ein niedriges Elastizitätsmodul, ein tiefer Glasübergangspunkt oder eine hohe Witterungsbeständigkeit.

Besonders bevorzugt ist das Silangruppen-haltige Polyurethan erhältlich aus der Umsetzung von NCO-terminierten Urethan-Polyethern mit Aminosilanen oder Hydroxysilanen. Geeignete NCO-terminierte Urethan-Polyether sind erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit einer überstöchiometrischen Menge an Polyisocyanaten, insbesondere Diisocyanaten.

Bevorzugt wird die Umsetzung zwischen dem Polyisocyanat und dem Polyetherpolyol unter Feuchtigkeitsausschluss bei einer Temperatur von 50 °C bis 160 °C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Urethan-Polyether nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt.

Bevorzugte Diisocyanate sind ausgewählt aus der Gruppe bestehend aus 1,6-Hexamethylendiisocyanat (HDI), 1-Isocyanato-3,3,5-trimethyl-5-isocyanatomethylcyclohexan (Isophorondiisocyanat oder IPDI), 2,4- und 2,6-Toluylendiisocyanat und beliebige Gemische dieser Isomeren (TDI) und 4,4'-, 2,4'- und 2,2'-Diphenylmethandiisocyanat und beliebige Gemische dieser Isomeren (MDI). Besonders bevorzugt sind IPDI oder TDI. Meist bevorzugt ist IPDI. Damit werden Silangruppen-haltige Polyurethane mit besonders guter Lichtechtheit erhalten.

Speziell geeignet als Polyetherpolyole sind Polyoxyalkylendiole oder Polyoxyalkylentriole mit einem Ungesättigtheitsgrad tiefer als 0.02 mEq/g, insbesondere tiefer als 0.01 mEq/g, und einem mittleren Molekulargewicht im Bereich von 400 bis 25'000 g/mol, insbesondere 1000 bis 20'000 g/mol.

Neben Polyetherpolyolen können anteilig auch andere Polyole eingesetzt werden, insbesondere Polyacrylatpolyole, sowie niedrigmolekulare Diole oder Triole.

Geeignete Aminosilane für die Umsetzung mit einem NCO-terminierten Urethan-Polyether sind primäre und sekundäre Aminosilane. Bevorzugt sind 3-Aminopropyltrimethoxysilan, 3-Aminopropyldimethoxymethylsilan, 4-Aminobutyltrimethoxysilan, 4-Amino-3-methylbutyltrimethoxysilan, 4-Amino-3,3-di-methylbutyltrimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-

(3-Trimethoxysilylpropyl)aminobernsteinsäuredimethyl- oder -diethylester. Ebenfalls geeignet sind Analoga der genannten Aminosilane mit Ethoxy- oder Isopropoxygruppen anstelle der Methoxygruppen am Silicium.

Geeignete Hydroxysilane für die Umsetzung mit einem NCO-terminierten Urethan-Polyether sind insbesondere erhältlich aus der Addition von Aminosilanen an Lactone oder an cyclische Carbonate oder an Lactide.

Dafür geeignete Aminosilane sind insbesondere 3-Aminopropyltrimethoxysilan, 3-Aminopropyltriethoxysilan, 4-Aminobutyltrimethoxysilan, 4-Aminobutyltriethoxysilan, 4-Amino-3-methylbutyltrimethoxysilan, 4-Amino-3-methylbutyltriethoxy-silan, 4-Amino-3,3-dimethylbutyltrimethoxysilan, 4-Amino-3,3-dimethylbutyltri-ethoxysilan, 2-Aminoethyltrimethoxysilan oder 2-Aminoethyltriethoxysilan. Besonders bevorzugt sind 3-Aminopropyltrimethoxysilan, 3-Aminopropyltriethoxysilan, 4-Amino-3,3-dimethylbutyltrimethoxysilan oder 4-Amino-3,3-dimethyl-butyltriethoxysilan.

Als Lactone geeignet sind insbesondere γ-Valerolacton, γ-Octalacton, δ-Decalacton, und ε-Decalacton, insbesondere γ-Valerolacton.

Als cyclische Carbonate eignen sich insbesondere 4,5-Dimethyl-1,3-dioxolan-2-on, 4,4-Dimethyl-1,3-dioxolan-2-on, 4-Ethyl-1,3-dioxolan-2-on, 4-Methyl-1,3-dioxolan-2-on oder 4-(Phenoxymethyl)-1,3-dioxolan-2-on.

Als Lactide eignen sich insbesondere 1,4-Dioxan-2,5-dion (Lactid aus 2-Hydroxyessigsäure, auch "Glycolid" genannt), 3,6-Dimethyl-1,4-dioxan-2,5-dion (Lactid aus Milchsäure, auch "Lactid" genannt) und 3,6-Diphenyl-1,4-dioxan-2,5-dion (Lactid aus Mandelsäure).

Bevorzugte Hydroxysilane, welche auf diese Weise erhalten werden, sind N-(3-Triethoxysilylpropyl)-2-hydroxypropanamid, N-(3-Trimethoxysilylpropyl)-2-hydroxypropanamid, N-(3-Triethoxysilylpropyl)-4-hydroxypentanamid, N-(3-Triethoxysilylpropyl)-4-hydroxyoctanamid, N-(3-Triethoxysilylpropyl)-5-hydroxydecanamid und N-(3-Triethoxysilylpropyl)-2-hydroxypropylcarbamat.

Weiterhin sind geeignete Hydroxysilane auch erhältlich aus der Addition von Aminosilanen an Epoxide oder aus der Addition von Aminen an Epoxysilane. Bevorzugte Hydroxysilane, welche auf diese Weise erhalten werden, sind 2-Morpholino-4(5)-(2-trimethoxysilylethyl)cyclohexan-1-ol, 2-Morpholino-4(5)-(2-triethoxysilylethyl)cyclohexan-1-ol oder 1-Morpholino-3-(3-(triethoxysilyl)propoxy)propan-2-ol.

Als Silangruppen-haltige Polyether oder Poylurethane sind auch kommerziell erhältliche Produkte geeignet, insbesondere die Folgenden: MS Polymer^{™} (von Kaneka Corp.; insbesondere die Typen S203H, S303H, S227, S810, MA903 und S943); MS Polymer^{™} bzw. Silyl^{™} (von Kaneka Corp.; insbesondere die Typen SAT010, SAT030, SAT200, SAX350, SAX400, SAX725, MAX450, MAX951); Excestar^{®} (von Asahi Glass Co. Ltd.; insbesondere die Typen S2410, S2420, S3430, S3630); SPUR+* (von Momentive Performance Materials; insbesondere die Typen 1010LM, 1015LM, 1050MM); Vorasil^{™} (von Dow Chemical Co.; insbesondere die Typen 602 und 604); Desmoseal^{®} (von Bayer MaterialScience AG; insbesondere die Typen S XP 2458, S XP 2636, S XP 2749, S XP 2774 und S XP 2821), TEGOPAC^{®} (von Evonik Industries AG; insbesondere die Typen Seal 100, Bond 150, Bond 250), Polymer ST (von Hanse Chemie AG/Evonik Industries AG, insbesondere die Typen 47, 48, 61, 61LV, 77, 80, 81); Geniosil^{®} STP (von Wacker Chemie AG; insbesondere die Typen E10, E15, E30, E35).

Besonders bevorzugte Silangruppen-haltige organische Polymere weisen Endgruppen der Formel (II) auf, 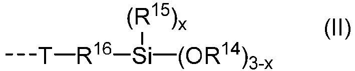 wobei
R¹⁶ für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht;
T für einen zweiwertigen Rest ausgewählt aus -O-, -S-, -N(R¹⁷)-, -O-CO-N(R¹⁷)-, -N(R¹⁷)-CO-O- und -N(R¹⁷)-CO-N(R¹⁷)- steht,
   wobei R¹⁷ für einen Wasserstoff-Rest oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilan-, Ether- oder Carbonsäureester-Gruppe aufweist, steht; und
R¹⁴, R¹⁵ und x die bereits genannten Bedeutungen aufweisen.

Bevorzugt steht R¹⁶ für 1,3-Propylen oder für 1,4-Butylen, wobei Butylen mit einer oder zwei Methylgruppen substituiert sein kann.

Besonders bevorzugt steht R¹⁶ für 1,3-Propylen.

In einer bevorzugten Ausführungsform der feuchtigkeitshärtenden Zusammensetzung gemäss der vorliegenden Erfindung umfasst das feuchtigkeitsreaktive Polymer **P** mindestens ein Polyurethanpolymer **PU,** wobei das Polyurethanpolymer **PU** freie oder latenten Isocyanatgruppen aufweist und die Zusammensetzung zusätzlich optional einen latenten Härter für Isocyanatgruppen umfasst.

In einer weiteren bevorzugten Ausführungsform der feuchtigkeitshärtenden Zusammensetzung gemäss der vorliegenden Erfindung umfasst das das feuchtigkeitsreaktive Polymer **P** mindestens ein silanfunktionelles Polymer **STP.**

In der erfindungsgemässen Zusammensetzung ist das silanfunktionelle Polymer **STP** bevorzugt in einer Menge von 10 Gew.-% bis 60 Gew.-%, insbesondere in einer Menge von 15 Gew.-% bis 50 Gew.-%, bezogen auf die gesamte Zusammensetzung, vorhanden.

Die erfindungsgemässe Zusammensetzung umfasst weiterhin zwischen 3 und 25 Gew.-%, bevorzugt zwischen 4 und 20 Gew.-%, bezogen auf die gesamte Zusammensetzung, mindestens einer Art mikroskopischer Hohlkugeln **H.**

Die mikroskopischen Hohlkugeln **H** weisen dabei eine Druckfestigkeit, gemessen nach ASTM D3102-72, von mindestens 2.5 MPa, bevorzugt mindestens 5 MPa, auf.

Die Druckfestigkeit kann mittels ASTM D3102-72 bestimmt werden. Eine detaillierte Methode für die Messung bevorzugter mikroskopischer Hohlkugeln **H** in Anlehnung an diese Industrienorm kann in WO 2012/033810, S. 15, zweiter Absatz, nachgelesen werden.

Wenn mikroskopische Hohlkugeln **H** mit einer Druckfestigkeit von unter 2.5 MPa verwendet werden ist nicht nur die Pumpbarkeit und die Dichtestabilität nach Pumpen beeinträchtigt, sondern es wird überraschenderweise auch ein Material mit geringerer Zugfestigkeit und schlechteren Applikationseigenschaften erhalten. Somit ist es für die Erfindung wesentlich, dass mikroskopische Hohlkugeln **H** mit einer Druckfestigkeit von mindestens 2.5 MPa verwendet werden.

Weiterhin müssen die mikroskopischen Hohlkugeln **H** zur Erfüllung der erfindungsgemässen Aufgaben eine volumenbasierte Partikelgrösse D90, gemessen mit einem Coulter-Zähler, von weniger als 100 µm aufweisen. Es können auch andere Messmethoden wie Siebanalyse oder Dynamische Lichtstreuung für die Partikelgrösse verwendet werden, jedoch muss gewährleistet sein (beispielsweise durch Vergleichsmessungen), dass allfälligen methodenabhängigen Messfehlern bei Vergleich von verschiedenen Methoden Rechnung getragen wird. Der Coulter-Zähler hat sich als genaue und reproduzierbare Messmethode für mikroskopischen Hohlkugeln **H,** insbesondere solche aus Glas, erwiesen. Eine solche Messung, einschliesslich eines geeigneten Messergeräts, wird in der US 8,261,577 (Spalte 8, Zeilen 7-12) beschrieben. Die Genauigkeit der Partikelmessung mit dem Coulter-Zähler von Partikeln dieser Grössenordnung, in Vergleich mit anderen Messmethoden, wird im beispielsweise im Journal of Geophysical Research, Vol. 115, C08024, 2010, S. 1-19 beschrieben.

Die Partikelgrösse D90 beschreibt den Wert, den 90% der Partikel einer Probe unterschreiten. Anders gesagt besitzen 90% der Partikel der mikroskopischen Hohlkugeln **H** eine Partikelgrösse von unter 100 µm.

Bevorzugt weisen die mikroskopischen Hohlkugeln **H** eine volumenbasierte Median-Partikelgrösse D50 von 15 bis 65 µm auf und eine volumenbasierte Partikelgrösse D10 von 5 bis 30 µm auf.

Die Median-Partikelgrösse D50 beschreibt den Wert, bei dem die Hälfte der Partikel einer Probe eine Grösse über diesem Wert und die Hälfte der Partikel eine Grösse unterhalb dieses Werts besitzen. Die Partikelgrösse D10 beschreibt den Wert, bei dem noch 10% der Partikel einer Probe eine Grösse unterhalb dieses Werts besitzen.

Bevorzugt enthalten die mikroskopischen Hohlkugeln **H** höchstens 5%, bevorzugt höchstens 1% Partikel mit einer Partikelgrösse von über 110 µm. Insbesondere enthalten die mikroskopischen Hohlkugeln **H** keine messbare Menge an Partikeln mit einer Partikelgrösse von über 110 µm.

Die mikroskopischen Hohlkugeln **H** sind im Wesentlichen sphärische Körper umfassend eine Hülle und Gas im Innenraum. Das Gas kann beispielsweise Luft, CO₂, Stickstoff, Sauerstoff, Wasserstoff, ein Edelgas oder Mischungen dieser Gase sein. Die Hülle kann beispielsweise aus Glas, insbesondere Borsilikatglas, Silikaten, insbesondere Alumosilikat, oder aus Polymeren, insbesondere thermoplastischen Polymeren gefertigt sein.

Bevorzugt sind die mikroskopischen Hohlkugeln **H** aus Glas, insbesondere Borsilikatglas. Geeignete mikroskopische Hohlkugeln **H** aus Glas und deren Herstellung werden beispielsweise in US 8,261,577 und WO 2012/033810 gelehrt.

Bevorzugte geeignete, kommerziell erhältliche mikroskopischen Hohlkugeln **H** aus Glas sind 3M^{™} Glass Bubbles, erhältlich von 3M Deutschland GmbH. Dabei sind insbesondere bevorzugt die Typen K20, K25, K32, K37, sowie S28HS.

In einer bevorzugten Ausführungsform der feuchtigkeitshärtenden Zusammensetzung gemäss der vorliegenden Erfindung sind die mikroskopischen Hohlkugeln **H** hohle Glaskugeln, insbesondere Borsilikatglaskugeln, mit einem Durchmesser von höchstens 110 µm.

Die erfindungsgemässe Zusammensetzung umfasst weiterhin mindestens einen anorganischen Füllstoff **F,** mit einem Anteil von mindestens 9 Gew.-%, bezogen auf die gesamte Zusammensetzung. Bevorzugt enthält die Zusammensetzung höchstens 50 Gew.-%, insbesondere höchstens 40 Gew.-% anorganischen Füllstoff **F,** bezogen auf die Gesamtzusammensetzung.

Ein Gehalt an anorganischem Füllstoff **F** von mindestens 9 Gew.-% in Kombination mit den mikroskopischen Hohlkugeln **H** ist wesentlich für die mechanischen Eigenschaften sowie die Applikationseigenschaften der ausgehärteten Zusammensetzung. Bei zu hohem Füllstoffgehalt über 50 Gew.-% wird es jedoch schwierig, eine genügend geringe Dichte von weniger als 1.20 kg/L einzustellen.

Geeignet als anorganische Füllstoffe **F** sind beispielsweise Kreiden, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, gemahlener Zement, Wollastonite, Kaoline, calcinierte Kaoline, Silikate wie Mica (Kalium-Aluminium-Silikat), Molekularsiebe, Aluminiumoxide, Aluminiumhydroxide, Magnesiumhydroxid, gefällte oder pyrogene Kieselsäuren inklusive hochdisperse Kieselsäuren aus Pyrolyseprozessen, Metall-Pulver wie Aluminium, Kupfer, Eisen, Silber oder Stahl, sowie Metalloxide wie Titandioxid.

Bevorzugte Füllstoffe **F** sind natürliche, gemahlene oder gefällte Calciumcarbonate, welche gegebenenfalls mit Fettsäuren, insbesondere Stearinsäure, beschichtet sind, sowie gefällte oder pyrogene Kieselsäuren inklusive hochdisperse Kieselsäuren aus Pyrolyseprozessen, sowie Metalloxide wie Titandioxid, sowie Aluminiumtrihydrat, und Mischungen dieser Füllstoffe. Aluminiumtrihydrat (ATH), auch γ-Al(OH)₃ genannt und bekannt als Mineral Gibbsit (Hydrargillit), ist ein dem Fachmann bekannter flammhemmender Füllstoff. Alle Füllstoffe **F** können auch oberflächenbeschichtet, insbesondere hydrophobiert, vorliegen. Bevorzugt sind Fettsäuren als Oberflächenbeschichtung, beziehungsweise Alkylsilan-basierte Beschichtungen im Falle der Kieselsäurefüllstoffe. Diese bilden eine hydrophobe Hülle um die Partikel. Eine besonders bevorzugte Fettsäure zur Beschichtung ist beispielsweise Stearinsäure.

In einer bevorzugten Ausführungsform der feuchtigkeitshärtenden Zusammensetzung gemäss der vorliegenden Erfindung enthält die Zusammensetzung mindestens 25 Gew.-% anorganischen Füllstoff **F,** und bevorzugt höchstens 40 Gew.-%, bezogen auf die gesamte Zusammensetzung. Diese Ausführungsform besitzt eine besonders hohe Zugfestigkeit bei relativ geringer Dichte und guter Auspressbarkeit und ist als Klebstoff oder elastischer Dichtstoff sehr gut geeignet. Ausserdem ist diese Ausführungsform weiss oder bunt einstellbar. Eine besonders bevorzugte Ausführungsform davon umfasst 25 bis 40 Gew.-% anorganischen Füllstoff **F,** bezogen auf die gesamte Zusammensetzung, sowie 4 bis 20 Gew.% mikroskopische Hohlkugeln **H,** bezogen auf die gesamte Zusammensetzung.

In einer weiteren bevorzugten Ausführungsform der feuchtigkeitshärtenden Zusammensetzung gemäss der vorliegenden Erfindung enthält die Zusammensetzung mindestens 9 Gew.-% anorganischen Füllstoff **F,** und bevorzugt höchstens 15 Gew.-%, bezogen auf die gesamte Zusammensetzung. Diese Ausführungsform besitzt eine besonders niedrige Dichte bei guter Zugfestigkeit guter Auspressbarkeit und ist als Parkettklebstoff oder Fugendichtstoff sehr gut geeignet. Ausserdem ist diese Ausführungsform weiss oder bunt einstellbar. Eine besonders bevorzugte Ausführungsform davon umfasst 9 bis 15 Gew.-% anorganischen Füllstoff **F,** bezogen auf die gesamte Zusammensetzung, sowie 5 bis 15 Gew.% mikroskopische Hohlkugeln **H,** bezogen auf die gesamte Zusammensetzung,

In weiteren bevorzugten Ausführungsformen der feuchtigkeitshärtenden Zusammensetzung gemäss der vorliegenden Erfindung enthält die Zusammensetzung zusätzlich noch mindestens einen Russ, bevorzugt zwischen 1 und 25 Gew.-%, insbesondere zwischen 5 und 20 Gew.-%, Russ, bezogen auf die Gesamtzusammensetzung.

Der Einsatz von Russ hat den Vorteil, dass besonders gute mechanische Werte, insbesondere Zugfestigkeit, bei gleichzeitig verhältnismässig niedrigen Auspresskräften erreicht werden können, was insbesondere den Einsatz dieser Ausführungsformen als strukturelle Klebstoffe ermöglicht. Eine besonders bevorzugte Ausführungsform von solchen Russ-haltigen Zusammensetzungen umfasst 9 bis 15 Gew.-% anorganischen Füllstoff **F,** bezogen auf die gesamte Zusammensetzung, sowie 4 bis 15 Gew.% mikroskopische Hohlkugeln **H,** bezogen auf die gesamte Zusammensetzung,

Geeignete Russe sind alle gängigen Industrierusse, insbesondere getrocknete Russe, Geeignet als getrockneter Russ sind alle gängigen Industrierusse (carbon black), wie beispielsweise Monarch^{®} 570, erhältlich von Cabot.

Zusätzlich können noch weitere Füllstoffe wie organische Füllstoffe, beispielsweise PVC Pulver oder Graphite eingesetzt werden. Bevorzugt sind Blähgraphite, welche eine intumeszierende Wirkung haben. Dabei sind ebenfalls alle kommerziell erhältlichen Typen geeignet, wie beispielsweise Nyagraph^{®} 250, erhältlich von Nyacol Nano Technlogies oder die Blähgraphite von Asbury Carbons.

Bevorzugte Ausführungsformen der vorliegenden Erfindung erreichen nach Aushärtung die Brandschutzklasse C (s2, d0) nach DIN EN 13501-1.

Die Zusammensetzung enthält bevorzugt mindestens einen Katalysator für die Vernetzung der feuchtigkeitsvernetzenden Polymere **P,** insbesondere für die Vernetzung von Silangruppen und/oder für die Vernetzung von Isocyanatgruppen mit Aminen oder Alkoholen. Als Katalysatoren geeignet sind insbesondere Metall-Verbindungen und/oder basische Stickstoff- oder Phosphorverbindungen. Geeignete Metall-Verbindungen sind insbesondere Verbindungen von Zinn, Titan, Zirkonium, Aluminium oder Zink, insbesondere Diorganozinn(IV)-Verbindungen wie insbesondere Dibutylzinn(IV)-diacetat, Dibutylzinn(IV)-dilaurat, Dibutylzinn(IV)-dineodecanoat oder Dibutylzinn(IV)-bis(acetylacetonat) und Dioctylzinn(IV)-dilaurat, sowie Titan(IV)- oder Zirkonium(IV)- oder Aluminium(III)- oder Zink(II)-Komplexe mit insbesondere Alkoxy-, Carboxylat-, 1,3-Diketonat-, 1,3-Ketoesterat- oder 1,3-Ketoamidat-Liganden.

Als Organotitanat geeignet sind insbesondere Titan(IV)-Komplexverbindungen. Insbesondere geeignet sind die kommerziell erhältlichen Typen Tyzor^{®} AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React^{®} KR^{®} TTS, 7, 9QS, 12, 26S, 33DS, 38S, 39DS, 44, 134S, 138S, 133DS, 158FS oder LICA^{®} 44 (alle von Kenrich Petrochemicals).

Geeignete basische Stickstoff- oder Phosphorverbindungen sind insbesondere Imidazole, Pyridine, Phosphazen-Basen oder bevorzugt Amine, Hexahydrotriazine, Biguanide, Guanidine oder Amidine.

Geeignete Amine sind insbesondere Alkyl-, Cycloalkyl- oder Aralkylamine; Amidgruppen-haltige Polyamine, sogenannte Polyamidoamine, wie sie im Handel erhältlich sind, beispielsweise unter den Markennamen Versamid^{®} (von Cognis), Aradur^{®} (von Huntsman), Euretek^{®} (von Huntsman) oder Beckopox^{®} (von Cytec); oder Aminosilane, wie insbesondere 3-Aminopropyltrimethoxysilan, 3-Aminopropyldimethoxymethylsilan, N-(2-Aminoethyl)-3-aminopropyltrimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- anstelle der Methoxygruppen am Silicium. Geeignete Hexahydrotriazine sind insbesondere 1,3,5-Hexahydrotriazin oder 1,3,5-Tris(3-(dimethylamino)propyl)-hexahydrotriazin.

Geeignete Biguanide sind insbesondere Biguanid, 1-Butylbiguanid, 1,1-Dimethylbiguanid, 1-Butylbiguanid, 1-Phenylbiguanid oder 1-(o-Tolyl)biguanid (OTBG). Geeignete Guanidine sind insbesondere 1-Butylguanidin, 1,1-Dimethylguanidin, 1,3-Dimethylguanidin, 1,1,3,3-Tetramethylguanidin (TMG), 2-(3-(Tri-methoxysilyl)propyl)-1,1,3,3-tetramethylguanidin, 2-(3-(Methyldimethoxysilyl)-propyl)-1,1,3,3-tetramethylguanidin, 2-(3-(Triethoxysilyl)propyl)-1,1,3,3-tetramethylguanidin, 1,5,7-Triazabicyclo[4.4.0]dec-5-en (TBD), 7-Methyl-1,5,7-triazabicyclo[4.4.0]dec-5-en, 7-Cyclohexyl-1,5,7-triazabicyclo[4.4.0]dec-5-en, 1-Phenylguanidin, 1-(o-Tolyl)guanidin (OTG), 1,3-Diphenylguanidin, 1,3-Di(o-to-lyl)guanidin oder 2-Guanidinobenzimidazol.

Geeignete Amidine sind insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, 6-Dibutylamino-1,8-diazabicyclo[5.4.0]undec-7-en, N,N'-Di-n-hexylacetamidin (DHA), 2-Methyl-1,4,5,6-tetrahydropyrimidin, 1,2-Dimethyl-1,4,5,6-tetrahydropyrimidin, 2,5,5-Trimethyl-1,4,5,6-tetrahydropyrimidin, N-(3-Trimethoxysilylpropyl)-4,5-dihydroimidazol oder N-(3-Triethoxysilylpropyl)-4,5-dihydroimidazol.

Weiterhin kann die Zusammensetzung als Co-Katalysator eine Säure enthalten, insbesondere eine Carbonsäure. Bevorzugt sind aliphatische Carbonsäuren wie Ameisensäure, Laurinsäure, Stearinsäure, Isostearinsäure, Ölsäure, 2-Ethyl-2,5-dimethylcapronsäure, 2-Ethylhexansäure, Neodecansäure, aromatische Carbonsäuren wie Salicylsäure, Fettsäuregemische aus der Verseifung von natürlichen Fetten und Ölen oder Di- und Polycarbonsäuren, insbesondere Poly(meth)acrylsäuren.

Die Zusammensetzung kann weitere Bestandteile enthalten, insbesondere die folgenden Hilfs- und Zusatzmittel:
- Haftvermittler und/oder Vernetzer, insbesondere Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-dimethoxymethylsilan, N-(2-Aminoethyl)-N'-[3-(trimethoxysilyl)propyl]ethylendiamin oder deren Analoga mit Ethoxy- anstelle von Methoxygruppen, weiterhin N-Phenyl-, N-Cyclohexyl- oder N-Alkylaminosilane, Mercaptosilane, Epoxysilane, (Meth)acrylosilane, Anhydridosilane, Carbamatosilane, Alkylsilane oder Iminosilane, oligomere Formen dieser Silane, Addukte aus primären Aminosilanen mit Epoxysilanen oder (Meth)acrylosilanen oder Anhydridosilanen, aminofunktionelle Alkylsilsesquioxane, insbesondere aminofunktionelles Methylsilsesquioxan oder aminofunktionelles Propylsilsesquioxan. Insbesondere geeignet sind 3-Aminopropyltrimethoxysilan, 3-Aminopropyltriethoxysilan, N-(2-Aminoethyl)-3-aminopropyltrimethoxysilan, N-(2-Aminoethyl)-3-aminopropyl-triethoxysilan, 3-Glycidoxypropyltrimethoxysilan, 3-Glycidoxypropyltriethoxysilan oder 3-Ureidopropyltrimethoxysilan, oder oligomere Formen dieser Silane;
- Trocknungsmittel, insbesondere Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, Calciumoxid oder Molekularsiebe, insbesondere Vinyltrimethoxysilan oder Vinyltriethoxysilan;
- Weichmacher, insbesondere Carbonsäureester wie Phthalate, insbesondere Dioctylphthalat, Bis(2-ethylhexyl)phthalat, Bis(3-propylheptyl)phthalat, Diisononylphthalat oder Diisodecylphthalat, Diester von ortho-Cyclohexandicarbonsäure, insbesondere Diisononyl-1,2-cyclohexandicarboxylat, Adipate, insbesondere Dioctyladipat, Bis(2-Ethylhexyl)adipat, Azelate, insbesondere Bis(2-ethylhexyl)acelat, Sebacate, insbesondere Bis(2-ethylhexyl)sebacat oder Diisononylsebacat, Polyole, insbesondere Polyoxyalkylenpolyole oder Polyesterpolyole, Glykolether, Glykolester, organische Phosphor- oder Sulfonsäureester, Sulfonsäureamide, Polybutene oder von natürlichen Fetten oder Ölen abgeleitete Fettsäuremethyl- oder -ethylester, auch "Biodiesel" genannt;
- Lösemittel;
- organische Füllstoffe, insbesondere Graphit, Cellulose, Polymerpulver, insbesondere PVC-Pulver;
- Fasern, insbesondere Glasfasern, Kohlefasern, Metallfasern, Keramikfasern oder Kunststofffasern wie Polyamidfasern oder Polyethylenfasern;
- Farbstoffe und Pigmente;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene;
- Stabilisatoren gegen Oxidation, Wärme, Licht oder UV-Strahlung;
- natürliche Harze, Fette oder Öle wie Kolophonium, Schellack, Leinöl, Rizinusöl oder Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in härtbaren Zusammensetzungen eingesetzte Substanzen. Es kann sinnvoll sein, gewisse Bestandteile vor dem Einmischen in die Zusammensetzung chemisch oder physikalisch zu trocknen.

In einer bevorzugten Ausführungsform enthält die Zusammensetzung mindestens ein Additiv, wobei das Additiv ausgewählt ist aus der Liste bestehend aus Weichmacher, Härtungskatalysator, Stabilisatoren, Thixotropiemittel, Haftvermittler und Trocknungsmittel.

In einer besonders bevorzugten Ausführungsform enthält die Zusammensetzung mindestens ein Trocknungsmittel und mindestens einen Haftvermittler.

Die Zusammensetzung wird vorzugsweise unter Ausschluss von Feuchtigkeit hergestellt und aufbewahrt. Typischerweise ist sie in einer geeigneten Verpackung oder Anordnung, wie insbesondere einer Flasche, einer Büchse, einem Beutel, einem Eimer, einem Fass oder einer Kartusche, unter Ausschluss von Feuchtigkeit lagerstabil.

Die Zusammensetzung kann in Form einer einkomponentigen oder in Form einer mehrkomponentigen, insbesondere zweikomponentigen, Zusammensetzung vorliegen.

Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist.

Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, gegebenenfalls unter Einwirkung von Feuchtigkeit.

Eine zweite oder gegebenenfalls weitere Komponenten wird bzw. werden mit der ersten Komponente vor oder bei der Applikation vermischt, insbesondere über einen Statikmischer oder über einen dynamischen Mischer.

Die Zusammensetzung wird insbesondere umgebungswarm, bevorzugt in einem Temperaturbereich zwischen 0°C und 45°C, insbesondere 5°C bis 35°C, appliziert und härtet auch bei diesen Bedingungen aus.

Bei der Applikation im Falle der der Verwendung von silanfunktionellen Polymeren **STP** beginnt die Vernetzungsreaktion der Silangruppen, gegebenenfalls unter Einfluss von Feuchtigkeit. Vorhandene Silangruppen können mit vorhandenen Silanolgruppen zu Siloxangruppen (Si-O-Si-Gruppen) kondensieren. Vorhandene Silangruppen können bei Kontakt mit Feuchtigkeit auch zu Silanolgruppen (Si-OH-Gruppen) hydrolysieren und durch nachfolgende Kondensationsreaktionen Siloxangruppen (Si-O-Si-Gruppen) bilden. Als Ergebnis dieser Reaktionen härtet die Zusammensetzung schliesslich aus.

Falls für die Aushärtung Wasser benötigt wird, kann dieses entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation Wasser oder eine Wasser enthaltende Komponente zugesetzt werden, zum Beispiel in Form einer wasserhaltigen oder Wasser freisetzenden Flüssigkeit oder Paste. Eine Paste ist insbesondere geeignet für den Fall, dass die Zusammensetzung selber in Form einer Paste vorliegt.

Bei einer Aushärtung mittels Luftfeuchtigkeit härtet die Zusammensetzung von aussen nach innen durch, wobei zunächst eine Haut an der Oberfläche der Zusammensetzung gebildet wird. Die sogenannte Hautbildungszeit stellt ein Mass für die Aushärtungsgeschwindigkeit der Zusammensetzung dar. Die Geschwindigkeit der Aushärtung wird dabei im Allgemeinen von verschiedenen Faktoren, wie beispielsweise der Verfügbarkeit von Wasser, der Temperatur usw., bestimmt.

Die Zusammensetzung eignet sich für eine Vielzahl von Anwendungen, insbesondere als Harz zur Herstellung von Faserverbundwerkstoff (Composite), als Hartschaum, Weichschaum, Formteil, Elastomer, Faser, Folie oder Membran, als Vergussmasse, Dichtstoff, Klebstoff, Belag, Beschichtung oder Anstrich für Bau- und Industrieanwendungen, beispielsweise als Nahtabdichtung, Hohlraumversiegelung, Elektroisolationsmasse, Spachtelmasse, Fugendichtstoff, Schweiss- oder Bördelnahtdichtstoff, Montageklebstoff, Karrosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag, Bodenbeschichtung, Balkonbeschichtung, Dachbeschichtung, Betonschutzbeschichtung, Parkhausbeschichtung, Versiegelung, Rohrbeschichtung, Korrosionsschutzbeschichtung, Textilbeschichtung, Dämpfungselement, Dichtungselement oder Spachtelmasse.

Besonders geeignet ist die Zusammensetzung als Klebstoff und/oder Dichtstoff, insbesondere für die Fugenabdichtung und für elastische Klebeverbindungen in Bau- und Industrieanwendungen, sowie als elastische Beschichtung mit rissüberbrückenden Eigenschaften, insbesondere zum Schützen und/oder Abdichten von beispielsweise Dächern, Böden, Balkonen, Parkdecks oder Betonröhren, sowie als Kleb- und/oder Dichtstoff in der Herstellung, Reparatur und Ausrüstung von Transportmitteln, wie beispielsweise Schienentransportmitteln, Strassentransportmitteln, Luftfahrzeugen und Schiffen.

Bevorzugt stellt die Zusammensetzung somit einen Klebstoff oder einen Dichtstoff oder eine Beschichtung dar.

Eine solche Zusammensetzung enthält typischerweise Weichmacher, Füllstoffe, Haftvermittler und/oder Vernetzer und Trocknungsmittel und gegebenenfalls weitere Hilfs- und Zusatzstoffe.

Die erfindungsgemässe Zusammensetzung weist eine Dichte von weniger als 1.20 kg/L, bevorzugt weniger als 1.10 kg/L, auf. In besonders bevorzugten Ausführungsformen weist die erfindungsgemässe Zusammensetzung eine Dichte von weniger als 1.00 kg/L auf, insbesondere weniger als 0.90 kg/L.

Die Dichte kann mittels eines Dichtemessgerätes, bevorzugt eines Pyknometers, oder über Wasserverdrängung (Volumenmessung durch Archimedes-Prinzip) bestimmt werden.

Der Fachmann kann die gewünschte Dichte der Zusammensetzung einfach einstellen, indem er die Mengen und Art der erfindungsgemässen Bestandteile der Zusammensetzung gemäss Anspruch 1 durch Routineversuche variiert.

Für eine Anwendung als Klebstoff oder Dichtstoff weist die Zusammensetzung bevorzugt eine pastöse Konsistenz mit strukturviskosen Eigenschaften auf. Ein solcher pastöser Dichtstoff oder Klebstoff wird insbesondere aus handelsüblichen Kartuschen, welche manuell, mittels Druckluft oder Batterie betrieben werden, oder aus einem Fass oder Hobbock mittels einer Förderpumpe oder eines Extruders, gegebenenfalls mittels eines Applikationsroboters, auf ein Substrat aufgetragen.

Für eine Anwendung als Beschichtung weist die Zusammensetzung bevorzugt eine bei Raumtemperatur flüssige Konsistenz mit selbstverlaufenden Eigenschaften auf. Gegebenenfalls ist sie leicht thixotrop, so dass die Beschichtung an abschüssigen bis senkrechten Flächen applizierbar ist, ohne sofort wegzufliessen. Sie wird insbesondere appliziert mittels Rolle oder Pinsel oder durch Ausgiessen und Verteilen mittels beispielsweise einem Roller, einem Schaber oder einer Zahntraufel.

Bei der Applikation wird die Zusammensetzung bevorzugt auf mindestens ein Substrat appliziert.

Geeignete Substrate sind insbesondere
- Glas, Glaskeramik, Beton, Mörtel, Backstein, Ziegel, Gips oder Natursteine wie Kalkstein, Granit oder Marmor;
- Metalle und Legierungen, wie Aluminium, Eisen, Stahl oder Buntmetalle, sowie oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) oder Ethylen/Propylen/Dien-Terpolymere (EPDM), oder faserverstärkte Kunststoffe wie Kohlefaserverstärkte Kunststoffe (CFK), Glasfaser-verstärkte Kunststoffe (GFK) oder Sheet Moulding Compounds (SMC), wobei die Kunststoffe bevorzugt mittels Plasma, Corona oder Flammen oberflächenbehandelt sein können;
- beschichtete Substrate, wie pulverbeschichtete Metalle oder Legierungen;
- Farben oder Lacke, insbesondere Automobildecklacke.

Die Substrate können bei Bedarf vor dem Applizieren der Zusammensetzung vorbehandelt werden, insbesondere durch physikalische und/oder chemische Reinigungsverfahren oder durch das Aufbringen eines Haftvermittlers, einer Haftvermittlerlösung oder eines Primers.

Verklebt oder abgedichtet werden können zwei gleichartige oder zwei verschiedene Substrate, insbesondere die vorgängig genannten Substrate.

Nach der Aushärtung der Zusammensetzung mit Wasser, insbesondere in Form von Luftfeuchtigkeit, wird eine ausgehärtete Zusammensetzung erhalten.

Aus der Anwendung der Zusammensetzung entsteht ein Artikel, welcher mit der Zusammensetzung insbesondere verklebt, abgedichtet oder beschichtet wurde. Beim Artikel handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter; oder der Artikel kann ein Anbauteil davon sein.

Ein weiterer Aspekt der Erfindung ist die Verwendung einer feuchtigkeitshärtenden Zusammensetzung gemäss vorgängiger Beschreibung als Klebstoff, Dichtstoff oder Beschichtung zur Schalldämmung und/oder Wärmeisolation.

Ein weiterer Aspekt der Erfindung ist die Verwendung einer feuchtigkeitshärtenden Zusammensetzung gemäss vorgängiger Beschreibung als Klebstoff, Dichtstoff oder Beschichtung mit Brandschutzeigenschaften, welcher nach Aushärtung die Brandschutzklasse C (s2, d0) nach DIN EN 13501-1 erreicht.

Ein weiterer Aspekt der Erfindung ist die Verwendung einer feuchtigkeitshärtenden Zusammensetzung gemäss vorgängiger Beschreibung als Klebstoff, Dichtstoff oder Beschichtung zur Gewichtsreduktion.

Ein weiterer Aspekt der Erfindung ist ein Bauwerk oder Fertigungsgegenstand, das oder der mit einem Klebstoff, Dichtstoff oder einer Beschichtung gemäss vorgängiger Beschreibung verklebt, abgedichtet oder beschichtet wurde.

Ein weiterer Aspekt der Erfindung ist eine ausgehärtete Zusammensetzung gemäss vorgängiger Beschreibung.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1°C und eine relative Luftfeuchtigkeit von 50±5% bezeichnet.

Die **Zugfestigkeit** und die **Bruchdehnung** wurden nach DIN 53504 (Zuggeschwindigkeit: 200 mm/min) an während 7 Tagen bei 23°C und 50% relativer Luftfeuchtigkeit ausgehärteten Filmen mit einer Schichtdicke von 2 mm bestimmt.

Für die Bestimmung der **Auspresskraft** wurden die Zusammensetzungen in innenlackierte Aluminiumkartuschen (Durchmesser aussen 46.9 mm, Durchmesser innen 46.2 mm Länge 215 mm, Öffnung 15-M) gefüllt und mit einem Polyethlyen Stopfen (Durchmesser 46.1 mm) von Novelis Deutschland GmbH luftdicht verschlossen. Nach einer Konditionierung von 24 Stunden bei 23°C wurden die Kartuschen geöffnet und mittels Auspressgerät ausgepresst. Dafür wurde eine Düse mit einer 3 mm Innendurchmesser-Öffnung auf das Kartuschengewinde aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.

Die Messung der **Dichte** einer Probe wurde mit einem auf 23°C temperierten Pyknometer mit 100 mL Volumen durchgeführt.

Die theoretische Dichte einer Formulierung wurde Anhand der Rohstoffanteile und der Dichtedaten der Rohstoffe berechnet.

Zur Ermittlung der **Pumpbeständigkeit** wurde die Dichte einer Testformulierung zunächst frisch nach Herstellung gemessen, und ein zweites Mal, nachdem eine identische Probe mit einem Druck von 30 bar (Druckspitze beim Dosierhub) durch eine Fasspumpe befördert worden war. Eine Abweichung von 5% oder weniger der beiden Dichtemessungen bedeutet zufriedenstellende Pumpbeständigkeit. Der **Fadenzug** in mm beschreibt die Länge des Dichtstofffadens, der nach Applikation des Dichtstoffs aus einer Applikationspistole beim Anheben der Düse von der applizierten Dichtstoffraupe verbleibt. Ein kürzerer Faden ist bevorzugt.

### Herstellung des Polymers P und des Thixotropiemittels 1

### Herstellung des silanfunktionellen Polymers STP-1

Unter Feuchtigkeitsausschluss wurden 1000 g Polyol Acclaim^{®} 12200 (von Covestro; low monol Polyoxypropylendiol, OH-Zahl 11.0 mg KOH/g, Wassergehalt ca. 0.02 Gew.-%), 43.6 g Isophorondiisocyanat (Vestanat^{®} IPDI von Evonik Industries), 126.4 g Triethylenglycol bis(2-ethylhexanoat) (Solusolv^{®} 2075 von Eastman Chem.) und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gew.-% erreicht hatte. Anschliessend wurden 62.3 g N-(3-Trimethoxysilylpropyl)amino-bernsteinsäurediethylester (Addukt aus 3-Aminopropyltrimethoxysilan und Maleinsäurediethylester; hergestellt nach den Angaben in US 5,364,955) eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt.

### Herstellung des Thixotropiemittels 1

In einem Vakuummischer wurden 1000 g hydriertes Diisononylphthalat (Hexamol^{®} DINCH, BASF) und 160 g 4,4'-Diphenylmethandiisocyanat (Desmodur^{®} 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropiemittel 1 enthält 20 Gewichtsteile dieses Reaktionsprodukts und 80 Gewichtsteile Diisodecylphthalat.

### Herstellung der feuchtigkeitshärtenden Zusammensetzungen

Vergleichsbeispiele sind in den Tabellen 2 bis 5 mit "(Ref.)" gekennzeichnet. Die verwendeten Rohstoffe werden in Tabelle 1 beschrieben.

### Verwendete Rohstoffe

**Tabelle 1: Verwendete Rohstoffe in den Beispielformulierungen.**

| **Rohstoff** | **Hersteller / Beschreibung** |
|---|---|
| Polymer STP-1 | Silanfunktionelles Polymer; Herstellung siehe oben. |
| Weichmacher 1 | Diisodecylphthalat (Jayflex^{®} DIDP; Exxon Mobil) |
| Weichmacher 2 | 1,2-Cyclohexandicarbonsäurediisononylester (Hexamoll^{®} DINCH; BASF) |
| Anorganischer Füllstoff F1 | Titandioxid (Kronos^{®} 2500; Kronos) |
| Anorganischer Füllstoff F2 | Pyrogene Kieselsäure (Cab-O-Sil^{®} M5; Cabot) |
| Anorganischer Füllstoff F3 | Gemahlenes Calciumcarbonat (Omyacarb^{®} 5-GU; Omya) |
| Russ | Carbon black (Monarch^{®} 570; Cabot) (getrocknet) |
| Mikroskopische Hohlkugeln H1 | Hohlkugeln aus Borsilikatglas, Dichte: 0.15 kg/L, isostatische Druckfestigkeit: 2.1 MPa, Teilchengrösse D90: 105 µm, grösster Durchmesser: 115 µm (3M^{®} Glass Bubbles K15; 3M) |
| Mikroskopische Hohlkugeln H2 | Hohlkugeln aus Borsilikatglas, Dichte: 0.25 kg/L, isostatische Druckfestigkeit: 5.2 MPa, Teilchengrösse D90: 95 µm, grösster Durchmesser: 105 µm (3M^{®} Glass Bubbles K25; 3M) |
| Mikroskopische Hohlkugeln H3 | Hohlkugeln aus Borsilikatglas, Dichte: 0.32 kg/L, isostatische Druckfestigkeit: 13.8 MPa, Teilchengrösse D90: 80 µm, grösster Durchmesser: 85 µm (3M^{®} Glass Bubbles K32; 3M) |
| Mikroskopische Hohlkugeln H4 | Hohlkugeln aus Borsilikatglas, Dichte: 0.28 kg/L, isostatische Druckfestigkeit: 21.0 MPa, Teilchengrösse D90: 55 µm, grösster Durchmesser: 65 µm (3M^{®} Glass Bubbles S28HS; 3M) |
| Mikroskopische Hohlkugeln H5 | Hohlkugeln aus Alumosilikat, Dichte 0.6-0.7 kg/L, Teilchengrösse 50-180 µm (Aeropor^{®} 180, SH Minerals) |
| Mikroskopische Hohlkugeln H6 | Hohlkugeln aus Alumosilikat, Dichte 0.7 kg/L, Teilchengrösse 50-300 µm (Cenospheres^{®}, SH Minerals) |
| Mikroskopische Hohlkugeln H7 | Expandierte Hohlkugeln aus thermoplastischem Polymer, Dichte 0.025 kg/L, Druckfestigkeit 1.2 MPa, Teilchengrösse 35-55 µm (Expancel^{®} 461 DET d25, AkzoNobel) |
| Thixotropiemittel 1 | Harnstoffderivat; Herstellung siehe oben |
| Thixotropiemittel 2 | Rhizinusölderivat (Thixatrol^{®} ST; Elementis) |
| Katalysator 1 | Dibutylzinndilaurat (Sigma Aldrich) |
| Trocknungsmittel | Vinyltrimethoxysilan (Silquest^{®} A-171; Momentive) |
| Haftvermittler | N-(2-Aminoethyl)-(3-aminopropyl)trimethoxysilan (Silquest^{®} A-1110; Momentive) |
| Stabilisator | HALS Lichtstabilisator (Tinuvin^{®} 770 DF; BASF) |

**Tabelle 2: Zusammensetzungen Z-1 bis Z-4 in Gew.-%, jeweils bezogen auf die gesamte Zusammensetzung.**

| **Zusammensetzung** | **Z-1** (Ref.) | **Z-2** | **Z-3** | **Z-4** |
|---|---|---|---|---|
| Polymer STP-1 | 40.0 | 40.0 | 40.0 | 40.0 |
| Stabilisator | 0.3 | 0.3 | 0.3 | 0.3 |
| Weichmacher 1 | 9.18 | 9.18 | 9.18 | 9.18 |
| Trocknungsmittel | 2.0 | 2.0 | 2.0 | 2.0 |
| Anorganischer Füllstoff F1 | 2.0 | 2.0 | 2.0 | 2.0 |
| Thixotropiemittel 1 | 25.0 | 25.0 | 25.0 | 25.0 |
| Anorganischer Füllstoff F2 | 2.0 | 2.0 | 2.0 | 2.0 |
| Anorganischer Füllstoff F3 | 6.5 | 6.5 | 6.5 | 6.5 |
| Mikroskopische Hohlkugeln H1 | 11.0 | - | - | - |
| Mikroskopische Hohlkugeln H2 | - | 11.0 | - | - |
| Mikroskopische Hohlkugeln H3 | - | - | 11.0 | - |
| Mikroskopische Hohlkugeln H4 | - | - | - | 11.0 |
| Haftvermittler | 2.0 | 2.0 | 2.0 | 2.0 |
| Katalysator | 0.02 | 0.02 | 0.02 | 0.02 |
| TOTAL | 100 | 100 | 100 | 100 |

| **Testergebnisse** | | | | |
|---|---|---|---|---|
| Auspresskraft (3mm) [N] | 683 | 580 | 569 | 552 |
| Fadenzug [mm] | 40 | 40 | 40 | 43 |
| Zugfestigkeit [MPa] | 1.3 | 1.5 | 1.6 | 1.7 |
| Bruchdehnung [%] | 220 | 211 | 215 | 207 |
| Dichte vor Pumpen [kg/L] | 0.64 | 0.79 | 0.85 | 0.84 |
| Dichte nach Pumpen [kg/L] | 1.01 | 0.82 | 0.87 | 0.84 |
| Pumpbeständigkeit | Nein | Ja | Ja | Ja |

**Tabelle 3: Zusammensetzungen Z-5 bis Z-8 und Z-18 in Gew.-%, jeweils bezogen auf die gesamte Zusammensetzung. "n/m" bedeutet dass der Wert nicht gemessen wurde.**

| **Zusammensetzung** | **Z-5** | **Z-6** | **Z-7** | **Z-8** | **Z-18** (Ref.) |
|---|---|---|---|---|---|
| Polymer STP-1 | 40.0 | 40.0 | 40.0 | 50.0 | 40.0 |
| Stabilisator | 0.3 | 0.3 | 0.3 | 0.3 | 0.3 |
| Weichmacher 1 | 9.27 | 9.27 | 9.27 | 15.95 | 17.7 |
| Trocknungsmittel | 2.0 | 2.0 | 2.0 | 0.5 | 2.0 |
| Anorganischer Füllstoff F1 | 2.0 | 2.0 | 2.0 | - | 2.0 |
| Thixotropiemittel 1 | 25.0 | 25.0 | 25.0 | - | 25.0 |
| Anorganischer Füllstoff F2 | 2.0 | 2.0 | 2.0 | - | 2.0 |
| Anorganischer Füllstoff F3 | 8.4 | 9.4 | 10.4 | 9.1 | - |
| Russ | - | - | - | 18.5 | - |
| Mikroskopische Hohlkugeln H4 | 9.0 | 8.0 | 7.0 | 4.0 | 9.0 |
| Haftvermittler | 2.0 | 2.0 | 2.0 | 1.5 | 2.0 |
| Katalysator 1 | 0.03 | 0.03 | 0.03 | 0.15 | 0.02 |
| TOTAL | 100 | 100 | 100 | 100 | 100 |

| **Testergebnisse** | | | | | |
|---|---|---|---|---|---|
| Auspresskraft (3mm) [N] | 507 | 481 | 462 | n/m | 352 |
| Fadenzug [mm] | 37 | 32 | 40 | 39 | 51 |
| Zugfestigkeit [MPa] | 1.7 | 1.7 | 1.7 | 5.5 | 1.1 |
| Bruchdehnung [%] | 218 | 225 | 236 | 230 | 216 |
| Dichte vor Pumpen [kg/L] | 0.88 | 0.91 | 0.93 | 1.06 | 0.82 |
| Dichte nach Pumpen [kg/L] | 0.88 | 0.90 | 0.93 | 1.05 | 0.82 |
| Pumpbeständigkeit | Ja | Ja | Ja | Ja | Ja |

**Tabelle 4: Zusammensetzungen Z-9 bis Z-12 in Gew.-%, jeweils bezogen auf die gesamte Zusammensetzung. "n/m" bedeutet dass der Wert nicht gemessen wurde.**

| **Zusammensetzung** | **Z-9** | **Z-10** | **Z-11** | **Z-12** |
|---|---|---|---|---|
| Polymer STP-1 | 24.0 | 24.0 | 24.0 | 24.0 |
| Stabilisator | 0.3 | 0.3 | 0.3 | 0.3 |
| Weichmacher 1 | 10.1 | 10.1 | 10.1 | 10.1 |
| Trocknungsmittel 1 | 1.5 | 1.5 | 1.5 | 1.5 |
| Anorganischer Füllstoff F1 | 2.0 | 2.0 | 2.0 | 2.0 |
| Thixotropiemittel 1 | 20.0 | 20.0 | 20.0 | 20.0 |
| Anorganischer Füllstoff F3 | 37.0 | 33.0 | 29.0 | 25.0 |
| Mikroskopische Hohlkugeln H4 | 4.0 | 8.0 | 12.0 | 16.0 |
| Haftvermittler | 1.0 | 1.0 | 1.0 | 1.0 |
| Katalysator 1 | 0.1 | 0.1 | 0.1 | 0.1 |
| TOTAL | 100 | 100 | 100 | 100 |

| **Testergebnisse** | | | | |
|---|---|---|---|---|
| Auspresskraft (3mm) [N] | 535 | 587 | n/m | n/m |
| Fadenzug [mm] | 30 | 37 | 28 | 33 |
| Zugfestigkeit [MPa] | 2.0 | 2.0 | 2.0 | 2.1 |
| Bruchdehnung [%] | 255 | 196 | 158 | 139 |
| Dichte vor Pumpen [kg/L] | 1.17 | 1.01 | 0.90 | 0.81 |
| Dichte nach Pumpen [kg/L] | 1.19 | 1.00 | 0.90 | 0.81 |
| Pumpbeständigkeit | Ja | Ja | Ja | Ja |

**Tabelle 5: Zusammensetzungen Z-13 bis Z-17 in Gew.-%, jeweils bezogen auf die gesamte Zusammensetzung. * starkes Nachlaufen beim Auspressen aus der Kartusche bei Z-17**

| **Zusammensetzung** | **Z-13** (Ref.) | **Z-14** (Ref.) | **Z-15** | **Z-16** | **Z-17** (Ref.) |
|---|---|---|---|---|---|
| Polymer STP-1 | 17.5 | 17.5 | 21.0 | 21.0 | 17.5 |
| Weichmacher 2 | 31.21 | 31.21 | 31.5 | 31.5 | 31.56 |
| Trocknungsmittel | 1.5 | 1.5 | 1.5 | 1.5 | 1.5 |
| Thixotropiemittel 2 | 1.75 | 1.75 | 1.75 | 1.75 | 1.75 |
| Anorganischer Füllstoff F3 | 31 | 31 | 35.21 | 34.25 | 38.25 |
| Mikroskopische Hohlkugeln H2 | - | - | 8.0 | - | - |
| Mikroskopische Hohlkugeln H4 | - | - | - | 8.96 | - |
| Mikroskopische Hohlkugeln H5 | 16 | - | - | - | - |
| Mikroskopische Hohlkugeln H6 | - | 16 | - | - | - |
| Mikroskopische Hohlkugeln H7 | - | - | - | - | 1.0 |
| Haftvermittler | 1.0 | 1.0 | 1.0 | 1.0 | 1.0 |
| Katalysator 1 | 0.04 | 0.04 | 0.04 | 0.04 | 0.04 |
| TOTAL | 100 | 100 | 100 | 100 | 100 |

| **Testergebnisse** | | | | | |
|---|---|---|---|---|---|
| Zugfestigkeit [MPa] | 0.86 | 0.83 | 1.31 | 1.57 | 1.07 * |
| Bruchdehnung [%] | 129 | 117 | 146 | 166 | 175 * |
| Dichte berechnet [kg/L] | 1.13 | 1.13 | 0.97 | 0.97 | 0.88 * |
| Dichte gemessen frisch [kg/L] | 1.24 | 1.12 | 0.97 | 0.97 | 1.00 * |
| Dichte gemessen nach 6 Monaten RT [kg/L] | 1.24 | 1.12 | 0.97 | 0.97 | 1.02 * |

### Herstellung der STP-Zusammensetzungen Z-1 bis Z-18

In einem Vakuummischer wurden entsprechend den in der Tabellen 2 bis 5 angegebenen Gewichtsteilen das silanfunktionelle Polymer STP-1, Weichmacher und Trocknungsmittel während 5 Minuten gut vermischt. Anschliessend wurden die jeweiligen Füllstoffe, mikroskopischen Hohlkugeln und Thixotropiemittel während 15 Minuten bei 60°C eingeknetet. Bei ausgeschalteter Heizung wurden anschliessend Haftvermittler, Katalysator und gegebenenfalls Stabilisator beigefügt und die Mischung unter Vakuum während 10 Minuten zu einer homogenen Paste verarbeitet. Diese wurde dann in innenlackierte Aluminium-Spreizkolbenkartuschen abgefüllt und nach Lagerung für die Prüfkörper weiterverwendet. Die genauen Mengenangaben (in Gew.-%, bezogen auf die gesamte jeweilige Zusammensetzung) der einzelnen Rohstoffe für die jeweiligen Versuche sind in Tabellen 2 bis 5 dargestellt.

Die Messergebnisse in den Tabellen 2 bis 5 zeigen deutlich, dass die erfindungsgemässen Zusammensetzungen den nicht erfindungsgemässen Beispielen bezüglich hoher Zugfestigkeit, niedriger Auspresskraft, niedrigem Fadenzug, Pumpstabilität sowie gleichbleibend niedriger Dichte überlegen sind.

## Patentansprüche

1. Feuchtigkeitshärtende Zusammensetzung, umfassend
a) mindestens ein feuchtigkeitsreaktives Polymer **P** mit einem Anteil von 10 bis 60 Gew.-%, bezogen auf die gesamte Zusammensetzung,
b) mindestens einen anorganischen Füllstoff **F,** mit einem Anteil von mindestens 9 Gew.-%, bezogen auf die gesamte Zusammensetzung,
c) zwischen 3 und 25 Gew.-%, bezogen auf die gesamte Zusammensetzung, mindestens einer Art mikroskopischer Hohlkugeln **H,**
**dadurch gekennzeichnet, dass** die Zusammensetzung eine Dichte von weniger als 1.20 kg/L, bevorzugt weniger als 1.10 kg/L, aufweist, und
die mikroskopischen Hohlkugeln **H** eine Druckfestigkeit, gemessen nach ASTM D3102-72, von mindestens 2.5 MPa, bevorzugt mindestens 5 MPa, aufweisen, und die mikroskopischen Hohlkugeln **H** eine volumenbasierte Partikelgrösse D90, gemessen mit einem Coulter-Zähler, von weniger als 100 µm aufweisen.

2. Feuchtigkeitshärtende Zusammensetzung gemäss Anspruch 1, **dadurch gekennzeichnet, dass** die mikroskopischen Hohlkugeln **H** hohle Glaskugeln mit einem Durchmesser von höchstens 110 µm sind.

3. Feuchtigkeitshärtende Zusammensetzung gemäss Anspruch 1 oder 2, **dadurch gekennzeichnet, dass** der mindestens eine anorganische Füllstoff **F** ausgewählt ist aus der Liste bestehend aus gefällter oder gemahlener Kreide, gefällter oder pyrogener Kieselsäure, Titandioxid, sowie Kombinationen dieser Füllstoffe.

4. Feuchtigkeitshärtende Zusammensetzung gemäss einem der Ansprüche 1 bis 3, **dadurch gekennzeichnet, dass** das feuchtigkeitsreaktive Polymer **P** mindestens ein Polyurethanpolymer **PU** umfasst, wobei das Polyurethanpolymer **PU** freie oder latenten Isocyanatgruppen aufweist und die Zusammensetzung zusätzlich optional einen latenten Härter für Isocyanatgruppen umfasst.

5. Feuchtigkeitshärtende Zusammensetzung gemäss einem der Ansprüche 1 bis 3, **dadurch gekennzeichnet, dass** das feuchtigkeitsreaktive Polymer **P** mindestens ein silanfunktionelles Polymer **STP** umfasst.

6. Feuchtigkeitshärtende Zusammensetzung gemäss Anspruch 5, **dadurch gekennzeichnet dass** das silanfunktionelle Polymer **STP** Endgruppen der Formel (II) aufweist, 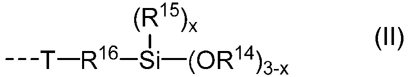 wobei
R¹⁴ für einen linearen oder verzweigten, einwertigen Kohlenwasserstoffrest mit 1 bis 5 C-Atomen steht; R¹⁵ für einen linearen oder verzweigten, einwertigen Kohlenwasserstoffrest mit 1 bis 8 C-Atomen steht;
x für einen Wert von 0 oder 1 oder 2 steht;
R¹⁶ für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht; und
T für einen zweiwertigen Rest ausgewählt aus -O-, -S-, -N(R¹⁷)-, -O-CO-N(R¹⁷)-, -N(R¹⁷)-CO-O- und -N(R¹⁷)-CO-N(R¹⁷)- steht,
wobei R¹⁷ für einen Wasserstoff-Rest oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilan-, Ether- oder Carbonsäureester-Gruppe aufweist, steht.

7. Feuchtigkeitshärtende Zusammensetzung gemäss einem der Ansprüche 1 bis 6, **dadurch gekennzeichnet, dass** die Zusammensetzung zusätzlich mindestens ein Additiv umfasst, wobei das Additiv ausgewählt ist aus der Liste bestehend aus Weichmacher, Härtungskatalysator, Stabilisatoren, Thixotropiemittel, Haftvermittler und Trocknungsmittel.

8. Feuchtigkeitshärtende Zusammensetzung gemäss einem der Ansprüche 1 bis 7, **dadurch gekennzeichnet, dass** die Zusammensetzung mindestens 25 Gew.-% anorganischen Füllstoff **F,** bezogen auf die gesamte Zusammensetzung, umfasst.

9. Feuchtigkeitshärtende Zusammensetzung gemäss einem der Ansprüche 1 bis 7, **dadurch gekennzeichnet, dass** die Zusammensetzung zusätzlich zwischen 1 und 25 Gew.-% Russ, bezogen auf die Gesamtzusammensetzung, enthält.

10. Feuchtigkeitshärtende Zusammensetzung gemäss einem der Ansprüche 1 bis 7, **dadurch gekennzeichnet, dass** die Zusammensetzung 9 bis 15 Gew.-% anorganischen Füllstoff **F,** bezogen auf die gesamte Zusammensetzung, umfasst sowie 5 bis 15 Gew.% mikroskopische Hohlkugeln **H,** bezogen auf die gesamte Zusammensetzung, umfasst.

11. Verwendung einer feuchtigkeitshärtenden Zusammensetzung gemäss einem der Ansprüche 1 bis 10 als Klebstoff, Dichtstoff oder Beschichtung zur Schalldämmung und/oder Wärmeisolation.

12. Verwendung einer feuchtigkeitshärtenden Zusammensetzung gemäss einem der Ansprüche 1 bis 10 als Klebstoff, Dichtstoff oder Beschichtung mit Brandschutzeigenschaften, welcher nach Aushärtung die Brandschutzklasse C (s2, d0) nach DIN EN 13501-1 erreicht.

13. Verwendung einer feuchtigkeitshärtenden Zusammensetzung gemäss einem der Ansprüche 1 bis 10 als Klebstoff, Dichtstoff oder Beschichtung zur Gewichtsreduktion.

14. Bauwerk oder Fertigungsgegenstand, das oder der mit einem Klebstoff, Dichtstoff oder einer Beschichtung gemäss Anspruch 13 verklebt, abgedichtet oder beschichtet wurde.

15. Ausgehärtete Zusammensetzung nach einem der Ansprüche 1 bis 10.

## Claims

1. Moisture-curing composition comprising
a) at least one moisture-reactive polymer P in a proportion of 10% to 60% by weight, based on the total composition,
b) at least one inorganic filler F in a proportion of at least 9% by weight, based on the total composition,
c) between 3% and 25% by weight, based on the total composition, of at least one type of hollow microsphere H,
**characterized in that** the composition has a density of less than 1.20 kg/L, preferably less than 1.10 kg/L, and the hollow microspheres H have a compressive strength, measured in accordance with ASTM D3102-72, of at least 2.5 MPa, preferably at least 5 MPa, and the hollow microspheres H have a volume-based particle size D90, measured with a Coulter counter, of less than 100 µm.

2. Moisture-curing composition according to Claim 1, **characterized in that** the hollow microspheres H are hollow glass spheres having a diameter of not more than 110 µm.

3. Moisture-curing composition according to Claim 1 or 2, **characterized in that** the at least one inorganic filler F is selected from the list consisting of precipitated or ground chalk, precipitated or fumed silica, titanium dioxide, or combinations of said fillers.

4. Moisture-curing composition according to any of Claims 1 to 3, **characterized in that** the moisture-reactive polymer P comprises at least one polyurethane polymer PU, wherein the polyurethane polymer PU has free or latent isocyanate groups and the composition in addition optionally comprises a latent curing agent for isocyanate groups.

5. Moisture-curing composition according to any of Claims 1 to 3, **characterized in that** the moisture-reactive polymer P comprises at least one silane-functional polymer STP.

6. Moisture-curing composition according to Claim 5, **characterized in that** the silane-functional polymer STP has end groups of the formula (II) 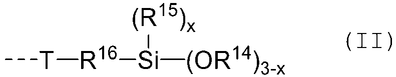 where
R¹⁴ is a linear or branched monovalent hydrocarbyl radical having 1 to 5 carbon atoms; R¹⁵ is a linear or branched monovalent hydrocarbyl radical having 1 to 8 carbon atoms;
x has a value of 0 or 1 or 2;
R¹⁶ is a linear or branched divalent hydrocarbyl radical having 1 to 12 carbon atoms that optionally has cyclic and/or aromatic moieties and optionally one or more heteroatoms, especially one or more nitrogen atoms; and T is a divalent radical selected from -0-, -S-, -N(R¹⁷)-, -O-CO-N(R¹⁷)-, -N(R¹⁷)-CO-O- and -N(R¹⁷)-CO-N(R¹⁷)-,
where R¹⁷ is a hydrogen radical or a linear or branched hydrocarbyl radical having 1 to 20 carbon atoms that optionally has cyclic moieties and that optionally has an alkoxysilane, ether or carboxylic ester group.

7. Moisture-curing composition according to any of Claims 1 to 6, **characterized in that** the composition additionally comprises at least one additive, wherein the additive is selected from the list consisting of plasticizers, curing catalysts, stabilizers, thixotropic agents, adhesion promoters, and desiccants.

8. Moisture-curing composition according to any of Claims 1 to 7, **characterized in that** the composition contains at least 25% by weight of inorganic filler F, based on the total composition.

9. Moisture-curing composition according to any of Claims 1 to 7, **characterized in that** the composition additionally contains between 1% and 25% by weight of carbon black, based on the total composition.

10. Moisture-curing composition according to any of Claims 1 to 7, **characterized in that** the composition comprises 9% to 15% by weight of inorganic filler F, based on the total composition, and also comprises 5% to 15% by weight of hollow microspheres H, based on the total composition.

11. Use of a moisture-curing composition according to any of Claims 1 to 10 as an adhesive, sealant or coating for sound insulation and/or heat insulation.

12. Use of a moisture-curing composition according to any of Claims 1 to 10 as an adhesive, sealant or coating having fire retardant properties, said composition achieving fire retardancy class C (s2, d0) as defined in DIN EN 13501-1 after curing.

13. Use of a moisture-curing composition according to any of Claims 1 to 10 as an adhesive, sealant or coating for weight reduction.

14. Built structure or article of manufacture that has been bonded, sealed or coated with an adhesive, sealant or a coating according to Claim 13.

15. Cured composition according to any of Claims 1 to 10.

## Revendications

1. Composition durcissant sous l'effet de l'humidité, comprenant
a) au moins un polymère P réactif avec l'humidité, en une proportion de 10 à 60% en poids, par rapport à la totalité de la composition,
a) au moins une charge inorganique F, en une proportion d'au moins 9% en poids, par rapport à la totalité de la composition,
c) entre 3 et 25% en poids, par rapport à la totalité de la composition, d'au moins un type de billes creuses microscopiques H,
**caractérisée en ce que** la composition présente une masse volumique inférieure à 1,20 kg/l, de préférence inférieure à 1,10 kg/l, et
les billes creuses microscopiques H présentent une résistance à la compression, mesurée selon la norme ASTM D3102-72, d'au moins 2,5 MPa, de préférence d'au moins 5 MPa, et les billes creuses microscopiques H présentent une grosseur de particule D90 basée sur le volume, mesurée à l'aide d'un compteur Coulter, inférieure à 100 µm.

2. Composition durcissant sous l'effet de l'humidité selon la revendication 1, **caractérisée en ce que** les billes creuses microscopiques H sont des billes creuses de verre présentant un diamètre d'au plus 110 µm.

3. Composition durcissant sous l'effet de l'humidité selon la revendication 1 ou 2, **caractérisée en ce que** ladite au moins une charge inorganique F est choisie dans la liste constituée par la craie précipitée ou broyée, la silice précipitée ou pyrogène, le dioxyde de titane ainsi que les combinaisons de ces charges.

4. Composition durcissant sous l'effet de l'humidité selon l'une des revendications 1 à 3, **caractérisée en ce que** le polymère P réactif avec l'humidité comprend au moins un polymère de polyuréthane PU, le polymère de polyuréthane PU présentant des groupes isocyanate libres ou latents et la composition comprenant en outre, éventuellement, un durcisseur latent pour les groupes isocyanate.

5. Composition durcissant sous l'effet de l'humidité selon l'une des revendications 1 à 3, **caractérisée en ce que** le polymère P réactif avec l'humidité comprend au moins un polymère à fonctionnalité silane STP.

6. Composition durcissant sous l'effet de l'humidité selon la revendication 5, **caractérisée en ce que** le polymère à fonctionnalité silane STP présente des groupes terminaux de formule (II), 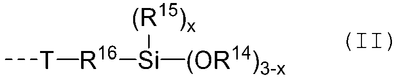 dans laquelle
R¹⁴ représente un radical hydrocarboné monovalent linéaire ou ramifié comprenant 1 à 5 atomes de carbone ; R¹⁵ représente un radical hydrocarboné monovalent linéaire ou ramifié comprenant 1 à 8 atomes de carbone ; x représente une valeur de 0 ou 1 ou 2 ;
R¹⁶ représente un radical hydrocarboné bivalent linéaire ou ramifié, comprenant 1 à 12 atomes de carbone, qui présente le cas échéant des proportions cycliques et/ou aromatiques et le cas échéant un ou plusieurs hétéroatomes, en particulier un ou plusieurs atomes d'azote ; et
T représente un radical bivalent choisi parmi -O-, -S-, -N(R¹⁷)-, -O-CO-N(R¹⁷)-, -N(R¹⁷)-CO-O- et -N(R¹⁷)-CO-N(R¹⁷)-,
R¹⁷ représentant un radical hydrogène ou un radical hydrocarboné linéaire ou ramifié comprenant 1 à 20 atomes de carbone, qui présente le cas échéant des proportions cycliques et qui présente le cas échéant un groupe alcoxysilane, éther ou ester d'acide carboxylique.

7. Composition durcissant sous l'effet de l'humidité selon l'une des revendications 1 à 6, **caractérisée en ce que** la composition comprend en outre au moins un additif, l'additif étant choisi dans la liste constituée par les plastifiants, les catalyseurs de durcissement, les stabilisants, les agents thixotropiques, les promoteurs d'adhérence et les dessiccateurs.

8. Composition durcissant sous l'effet de l'humidité selon l'une des revendications 1 à 7, **caractérisée en ce que** la composition comprend au moins 25% en poids de charge inorganique F, par rapport à la totalité de la composition.

9. Composition durcissant sous l'effet de l'humidité selon l'une des revendications 1 à 7, **caractérisée en ce que** la composition contient en outre entre 1 et 25% en poids de suie, par rapport à la totalité de la composition.

10. Composition durcissant sous l'effet de l'humidité selon l'une des revendications 1 à 7, **caractérisée en ce que** la composition contient 9 à 15% en poids de charge inorganique F, par rapport à la totalité de la composition, ainsi que 5 à 15% en poids de microbilles creuses microscopiques H, par rapport à la totalité de la composition.

11. Utilisation d'une composition durcissant sous l'effet de l'humidité selon l'une des revendications 1 à 10 comme adhésif, matériau d'étanchéité ou revêtement pour l'isolation acoustique et/ou l'isolation thermique.

12. Utilisation d'une composition durcissant sous l'effet de l'humidité selon l'une des revendications 1 à 10 comme adhésif, matériau d'étanchéité ou revêtement présentant des propriétés de protection incendie, qui atteint après durcissement la classe de protection incendie C (s2, d0) selon la norme DIN EN 13501-1.

13. Utilisation d'une composition durcissant sous l'effet de l'humidité selon l'une des revendications 1 à 10 comme adhésif, matériau d'étanchéité ou revêtement pour la réduction du poids.

14. Construction ou produit fini qui a été collé(e) étanchéifié(e) ou revêtu(e) par un adhésif, un matériau d'étanchéité ou un revêtement selon la revendication 13.

15. Composition durcie selon l'une des revendications 1 à 10.
